# EUROPEAN PATENT SPECIFICATION

(11) **EP 4 326 534 B1**
(45) Date of publication and mention of the grant of the patent: **07.10.2026**
(21) Application number: 22791265.6
(22) Date of filing: 19.04.2022
(51) Int. Cl.: B29C 64/35, B41J 29/17, B33Y 99/00, B29C 64/30, B33Y 40/20

(54) **MAINTENANCE AND CLEANING IN AN ADDITIVE MANUFACTURING MACHINE**
WARTUNG UND REINIGUNG IN EINER MASCHINE ZUR GENERATIVEN FERTIGUNG
ENTRETIEN ET NETTOYAGE DANS UNE MACHINE DE FABRICATION ADDITIVE

(30) Priority: 21.04.2021 US 202163177404 P
(43) Date of publication of application: 28.02.2024
(73) Proprietor: Tritone Technologies Ltd., 4809245 Rosh HaAyin (IL)
(72) Inventor: KEDAR, Eli, 5020000 Beit-Dagan (IL); FELDMAN, Alon, 7987500 Kibbutz Kfar-Menachem (IL); BEN-ZUR, Ofer, 4501068 Hod-HaSharon (IL); BEN-MAIMON, Rami, 7550331 Rishon Le Zion (IL)
(74) Representative: Schneiders & Behrendt Bochum
(86) International application number: PCT/IL2022/050407
(87) International publication number: WO 2022/224253

(56) References cited:
- WO-A1-2021/095036
- WO-A2-2009/013751
- AU-A1- 2019 330 385
- CN-A- 108 943 721
- CN-A- 108 943 721
- CN-B- 108 526 397
- CN-U- 208 962 684
- JP-A- 2015 139 957
- US-A1- 2004 265 413
- US-A1- 2004 265 413
- TEUBER DIPL.-ING ROBERT ET AL: "The New Innovative MoldJet ? Technology Overview on the process and the machine configuration at Fraunhofer IFAM in Dresden", 31 March 2021 (2021-03-31), XP093243948, Retrieved from the Internet <URL:https://www.ifam.fraunhofer.de/en/Aboutus/Locations/Dresden/additive_manufacturing/MoldJet/Download_Whitepaper_engl1.html> [retrieved on 20250128]

## Description

### FIELD AND BACKGROUND OF THE INVENTION

The present invention is defined by the appended claims.

International Patent Application No. II,2020/051176 to the present inventors discloses an additive manufacturing machine and associated method for making a part layerwise by firstly using additive manufacture to make a mold to define a space for the layer, and secondly filling the space with a paste to make a layer of the part. The machine comprises a first mold forming station with inkjet nozzles to form the mold using standard 3D printing, and a second paste dispensing station distanced from the first station, with a dispensing die slot for dispensing paste into the space to form a layer. The machine operates on multiple parts simultaneously, each being conveyed along a path through the stations.

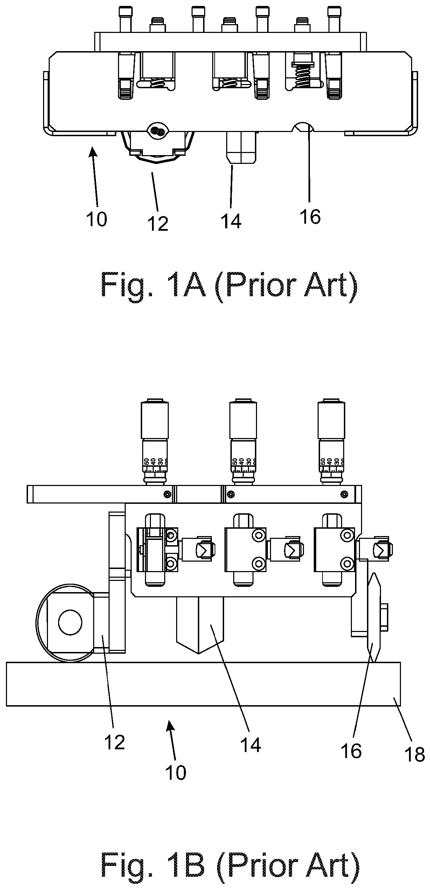

Figs. 1A and 1B are two views of exemplary paste filling heads, or injection heads, as used in the above-referred-to machine. A paste dispensing head 10 includes a roller 12, a die slot 14 and a blade 16 and operates on the space within the walls of mold 18. The paste is dispensed using the die slot 14 and blade 16 after the mold surface has been flattened by roller 12. Specifically, the roller 12, or heated cylinder, may be used to press and flatten the mold surface and then paste is applied from the die slot 14 into the space inside the mold 18 and flattened and spread using the blade 16, which removes excess paste from the surface. The head 10 holding the blade 16, die slot 14 and roller 12 moves in relation to the mold during the paste-filling process.

During the filling process, excess paste is accumulated on the roller 12, die slot 14 and blade 16.

In order to make sure that the mold filling is optimal and there are no scratches or other damage to the mold, the excess paste needs to be removed.

In the present inventors' further International Patent Application No. II,2019/050957 also published as AU 2019 330 385 A1, an apparatus and method is disclosed for hardening a paste within the walls of the mold, which comprises a sealing hood that closes to provide an airtight seal around the mold and the paste applied within the mold. Then a vacuum source evacuates air from the sealing hood in its closed position to apply a vacuum to the paste. The vacuum causes liquids to evaporate from the paste, and thus hardens the paste.

Again, paste may accumulate on the printing surface, thus preventing a vacuum-tight seal from being able to form.

Currently, one approach is to stop the printing process and manually wipe the blade clean. The die slot is a part with internal spaces and is impossible to clean in this manner. Furthermore cleaning needs to be done frequently, and a single 3D product consists of a large numbers of layers. Such a manual solution is labour-intensive, and slows down manufacture. In practice, the amount of cleaning is insufficient, reducing the overall production quality. In particular, dry paste on the instruments may cause the die to be filled imperfectly, or may cause the die to be rolled imperfectly, causing scratching and the like, and may cause hardening to be imperfect due to a failure to form a vacuum seal around the hood.

Teuber Dipl.-ing Robert et al The New Innovative MoldJet 1st March 2021 is a white paper providing an overview of a process and machine configuration as part of an expansion of expertise in view of the Moldjet process of Tritone Ltd.

US 2004/265413A1 Russel David et al 30th December 2004 discloses an apparatus for fabricating 3D objects that uses a rotary build table and an array of printheads above the table. The rotary table can rotate continuously while receiving successive layers of build material, allowing for more efficient 3D printing compared to reciprocating motion systems. These summaries highlight the key aspects of each document related to additive manufacturing technologies and systems, which could provide relevant background information for a patent application in this field.

CN 108 943 721 A Kocel 7th December 2018 discloses a cleaning device for 3D printer printheads. It includes an ink jet mechanism with an ink storage pond and sealing strip to collect ink from the printhead, and a wiping mechanism with a blade to scrape the printhead. The device allows for cleaning of printheads to prevent clogging.

CN 108 526 397 B Zhou Shenghao 13th March 2020 discloses a sand casting system with batching functionality. It includes devices for sand conveying, spreading, printing, cleaning, and locking/conveying of sand boxes. The system allows for automated sand casting with capabilities for batching and proportioning of sand materials.

### SUMMARY OF THE INVENTION

The present embodiments provide an integrated cleaning system that uses a solvent selected for the paste, for example water or organic solvents, to disperse the paste from the instruments, includes a feature for cleaning the internal spaces of the die slot and then uses filtration to allow recirculation of the solvent.

According to an aspect of some embodiments of the present invention there is provided a 3D printing system in which paste is used to fill a space enclosed by a 3D printed mold wall, the 3D printing system comprising a blade for spreading the paste, the system comprising a cleaning system, the cleaning system comprising a fluid and an applicator for applying the fluid to the blade to clean the blade after spreading the paste.

In embodiments, the cleaning system comprises an immersion bath for the fluid, the immersion bath filled with the fluid to a fluid surface level.

In embodiments, the applicator comprises rotating brushes partly submerged in the fluid, the blade cleaning system locating the blade between the brushes, and rotating the brushes onto the knife such that each surface of the blade is brushed into the fluid

In embodiments, the blade is held in a blade holder, the blade holder comprising air ducts directed at the blade, the air ducts connected to a source of pressurized air to provide a curtain of pressurized air running along the blade.

In embodiments, the cleaning system is configured to apply the curtain of pressurized air following withdrawal of the blade from between the brushes.

In embodiments, the brushes respectively comprise sections of silicone sheets

In embodiments, the brushes respectively comprise sections cut to have an inner diameter with protrusions reaching an outer diameter, the sections further having a central mounting slot.

In embodiments, the sections comprise an odd number of the protrusions, the sections being misaligned with respective neighbouring sections.

In embodiments, the immersion bath is retractable.

In embodiments, the immersion bath has a first end with a fluid level and an apex away from the fluid level, the apex comprising an outlet to a water purifier.

In embodiments, the water purifier may be a vortex separator for separating solids from the fluid using a vortex, or alternatively a bag filter, the bag filter filtering out solids from the fluid, in either case the water purifier allowing recirculation of the fluid.

In embodiments, the brushes are configured to be contra-rotated, each brush brushing a respective surface of the blade downwardly into the fluid.

The invention comprises a die slot for exuding the paste, the die slot having a lower surface through which the paste is exuded, the cleaning system comprising a wiping mechanism configured to wipe the lower surface of paste.

According to the invention, the wiping mechanism comprises an advanceable tape, the wiping mechanism configured to advance the tape to an unused length, and to wipe the length of unused tape along the lower surface of the die slot.

In embodiments, the cleaning system may include a die slot sealing mechanism which engages a sealing element into the die slot to seal the die slot and prevent drying of paste within the die slot during periods of non-use.

In embodiments, the sealing element comprises a resilient material and has a lateral cross section comprising a flat base and a hollow "O" section.

In embodiments, the sealing mechanism is movable between a first, parking position, a second position in proximity to the die slot when the die slot is in a cleaning position and a third position in contact with the die slot, the sealing mechanism configured to insert the sealing element over the die slot from the third position.

According to the invention, the wiping mechanism comprises an advanceable tape, the wiping mechanism configured to advance the tape to an unused length, and to wipe along a surface of the sealing mechanism.

Embodiments may include a roller, the cleaning mechanism comprising a cylindrical brush, the cylindrical brush being controlled to make contact with the roller and to rotate over a surface of the roller.

Embodiments may include a vacuum cover for placing over a newly formed layer to seal with a printing platen and form a vacuum over the layer to harden the layer. A source of pressurized air may provide compressed air to remove debris from the platen in the region of the vacuum cover to allow a vacuum seal to be formed.

According to a second aspect of the present invention there is provided a method of cleaning a blade of an injection head of a 3D printing mechanism in which layers are formed by injecting paste within walls of a mold and smoothing the paste with the blade to form a layer, the method comprising:
moving the injection head from a printing station to a cleaning station; and
at the cleaning station applying fluid to the blade to clean the blade.

In embodiments, the applying the fluid comprises:
locating the blade between brushes;
rotating the brushes;
raising up a reservoir of fluid such that the brushes are partly submerged in the fluid;
withdrawing the reservoir; and
drying the blade.

In embodiments, the drying the blade comprises connecting a high pressure source of air to a blade holder and directing air from the high pressure source to form curtains of air over either side of the blade

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIGs. 1A and 1B are two schematic views of a mold flattening and paste extrusion unit according to earlier filed patent applications of the present inventors.
FIG. 2 is a simplified block diagram of the different subsystems and stations for a cleaning system according to an embodiment of the present invention for use with an extrusion system;
FIGs. 3A and 3B are two exploded views of a blade cleaning system according to embodiments of the present invention and showing - up and down positions of the blade;
FIG. 4 is a diagram of the blade cleaning system of Figs. 3A and 3B in which the blade is enveloped in cleaning brushes and the cleaning brushes rotate while partially submerged in fluid in a reservoir
FIG. 5 is a simplified diagram showing a belt drive system for the brushes of Fig. 4;

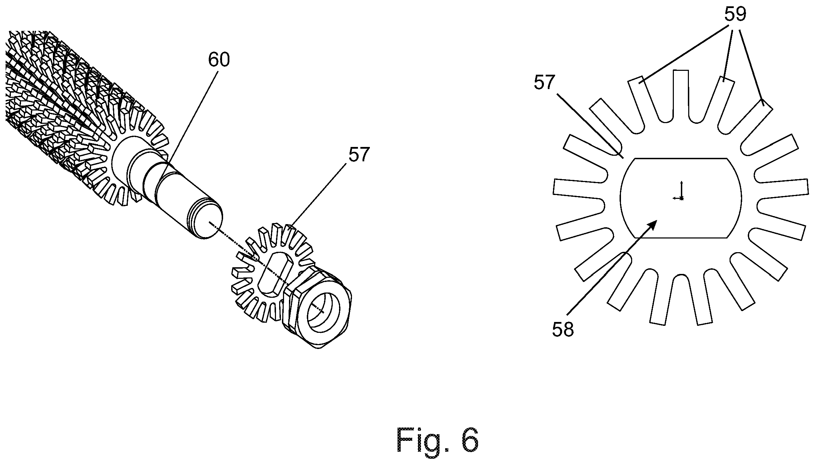

FIG. 6 is a simplified view showing the brush of Figs. 4 and 5 being constructed of sections, the inset showing a single section;
FIGs. 7A and 7B are two views of the blade holder of Figs. 3A and 3B showing air passages and air outlets to provide a double sided air knife to dry the blade after the brushing process;
FIG. 8 is a simplified flow diagram showing successive parts of the blade cleaning operation according to embodiments of the present invention;
FIGs. 9A and 9B are diagrams showing two alternative filter arrangements for the reservoir of Fig. 4;
FIGs. 10A and 10B are diagrams showing in greater detail the bag and vortex filters of Figs. 9A and 9B;
FIG. 11 is a simplified diagram showing a wiping and sealing arrangement for cleaning the paste extrusion unit according to embodiments of the present invention;
FIGs. 12A - 12C show in greater detail the wiping assembly of the arrangement of Fig. 11;
FIG. 13A is a simplified diagram showing the sealing assembly of the arrangement of Fig. 11;
FIG. 13B is a simplified diagram showing the sealing element used by the sealing assembly of Fig. 13A; and
FIG. 14 is a simplified diagram showing a roller cleaning arrangement for cleaning the mold-flattening roller according to embodiments of the present invention.

### DESCRIPTION OF SPECIFIC EMBODIMENTS OF THE INVENTION

The present invention, in some embodiments thereof, relates to a maintenance and cleaning system for an additive manufacturing machine and, more particularly, but not exclusively, to the maintenance and cleaning of an additive manufacturing machine as exemplified in Figs. 1A and 1B, that carries out layerwise printing of a mold and then filling of the mold with a viscous paste.

A 3D printing system in which paste is used to fill a space enclosed by a 3D printed mold wall, uses a blade for spreading the paste. In addition to spreading paste, the blade wipes off excess material.

A cleaning system for the blade includes an immersion bath, which is filled with fluid to an upper fluid level. Rotating brushes are partly submerged in the fluid, and when cleaning is needed, the blade is located between the brushes. The brushes rotate onto the knife blade such that each surface of the knife blade is brushed over to remove debris from the paste into the fluid.

The invention defines a blade cleaning method in which the blade, when contaminated with metal or ceramic paste, is submerged in a fluid that disperses residual paste. Brushes may remove the excess material from the blade surfaces. The fluid is a solvent that is selected for the particular paste being used. The fluid may thus be water if the paste is a water based composition. Alternatively, the fluid may be an organic solvent if the paste is an organic based composition.

The cleaning fluid may be circulated using a pump, and may be filtered using a bag filter.

Additionally or alternatively, the cleaning fluid may be filtered or other means of separation may be used, such as cyclonic separation using a centrifugal filter. Cyclonic separation is a method of removing particulates from an air, gas or liquid stream, without the use of filters.

Additionally or alternatively the cleaning fluid may be filttered using a slurry, and the wet blade following cleaning may be further dried by air flow.

The present embodiments may include a blade cleaning method in which the blade, while contaminated with metal or ceramic paste, is cleaned by a wiper which is then submerged in a fluid that disperses the paste ingredients.

The cleaning tape may be a roll unit, and the tape is advanced by a preset amount after each cleaning operation.

The tape used for cleaning may be - fabri, paper, or Polyester or a Polyester blend, and may include woven materials.

The die slot and die sealing element may be cleaned by the same tape moving along the slot and further along the linear seal.

The maintenance system for a paste deposition machine may include:
blade cleaning by submerging the blade in a fluid;
blade drying;
die slot wiping using tape, for example rolled tape; and
a press roller brush cleaning unit

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

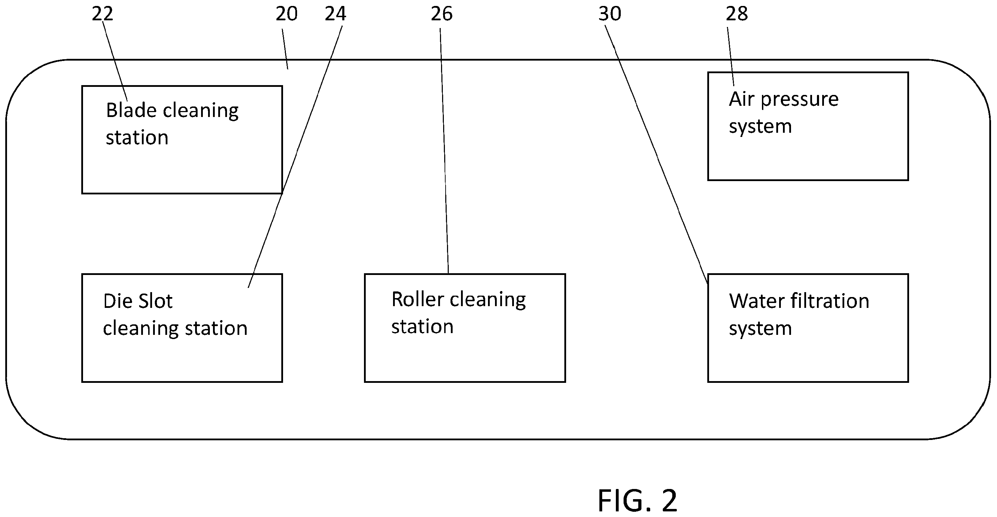

Referring now to the drawings, Figure 2 is a simplified block diagram which illustrates an overall maintenance system according to the present embodiments.

The cleaning system 20 that is included in the 3D printing machine includes a blade cleaning station 22, a die slot cleaning station 24, a roller cleaning station 26 and an air flow or pressure system 28, and a water filtration system 30. The systems are discussed individually below. Additional systems may be added.

As discussed, the filling paste, which may be metallic or ceramic or other material, is a high viscosity material. Once dried on the blade, it is difficult to remove. However, in a first embodiment, the paste is a water-based composition, so that exposure to water effectively disperses it. That is the paste is water soluble and water makes an effective solvent. The present embodiments may thus take advantage of this phenomenon and provide a blade cleaning station which submerges the blade after use in water. Then, rotational brushes are operated to brush along the length of the blade on either side, hence removing the dissolved paste. The water containing the excess paste circulates through a filtration or a separation unit as will be discussed in greater detail below.

In another embodiment, the paste is an organic based composition. In that case, the cleaning fluid is not water but an organic solvent. However the principle is the same.

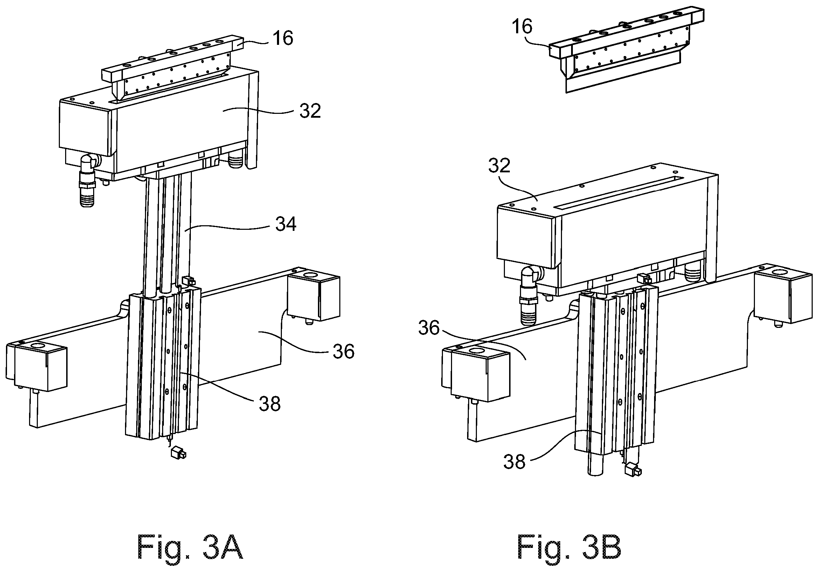

Reference is now made to Fig. 3A which shows the blade 16 immersed in a water or other solvent filled reservoir 32. The reservoir 32 is on telescopic legs 34 to be raised and lowered from holder 36, using pneumatic cylinders within housing 38.

Fig. 3B is a view of the same reservoir 32 in the lowered position. The reservoir is withdrawn and the blade 16 is free to return to printing.

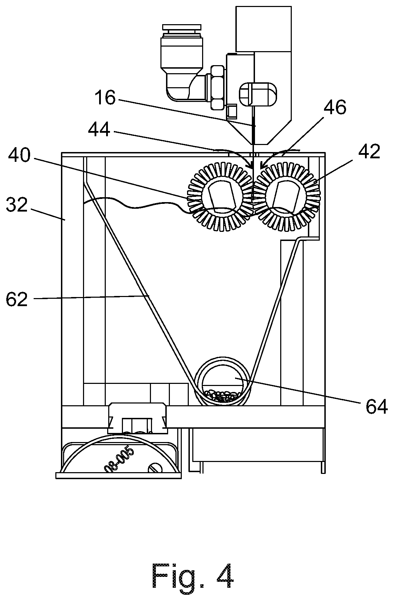

Reference is now made to Fig. 4, which is a simplified diagram showing a cutaway cross section of the reservoir 32. In water reservoir 32, two rotating cylindrical brushes 40 and 42 are partially immersed in the water or other solvent. The brushes 40 and 42 rotate in opposite directions, in accordance with arrows 44 and 46, and clean the blade on both sides. The brushes may be rotated such that each blade surface is brushed downwardly into the water or other solvent.

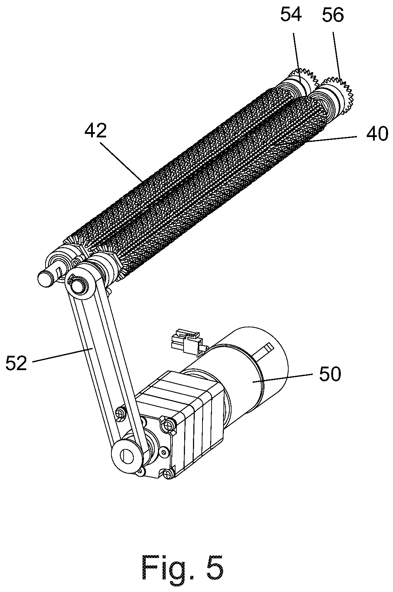

Referring now to Fig. 5, the brushes 40 and 42 may be driven by an electric motor 50 and belt 52. Brushes are synchronized with each other using gears 54 and 56.

Reference is now made to Fig. 4 which illustrates a construction of the brush according to one embodiment. Each rotating brush contains sections 57 made of a soft brushing material such as silicone sheet. The sections of soft material may be cut into a shape having an interior circumference and extensions, for example a star shape or the shape of a gear wheel or the like. The material for making the brushes may be selected from soft materials, such as materials having a material hardness that is in the range of 10-70 Shore A.

The shape may comprise a central mounting slot 58 and an odd number of fins 59. The odd number of fins allows the brush section to be mounted staggered on shaft 60 so that a brush effect is produced. That is, fins along the length of the brush are misaligned with the neighbouring sections.

The density of the paste removed from the knife is greater than the water density. As a result, the removed particles sink and accumulates at the bottom of the reservoir 32. Returning to Fig. 4, a V-shaped partition 62 guides the sediment against a stream of water that enters the reservoir from inlet 64. The water stream is created by a water pump, as will be discussed in greater detail hereinbelow.

In another embodiment, the blade is cleaned by a wiper that moves across the face of the blade and removes the excess paste. The wiper is then submerged in the water to disperse the paste and clean the wiper.

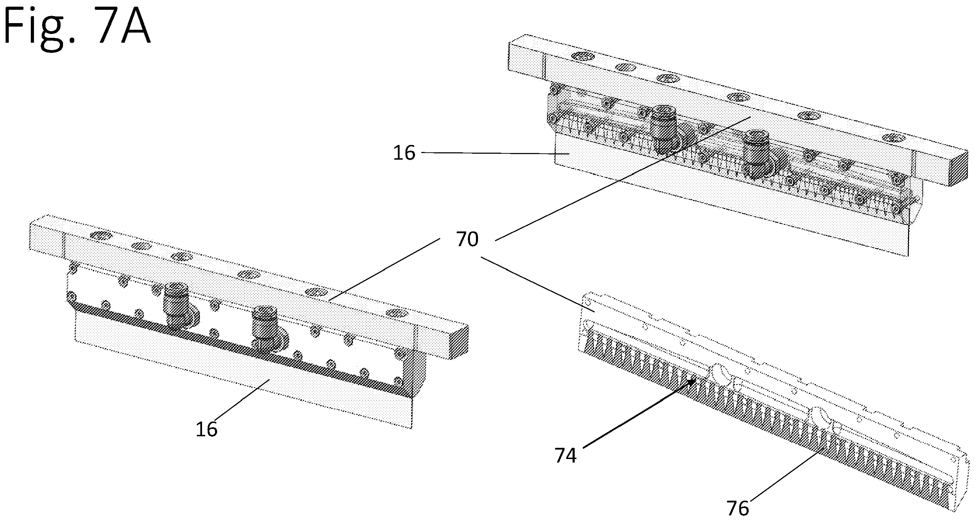

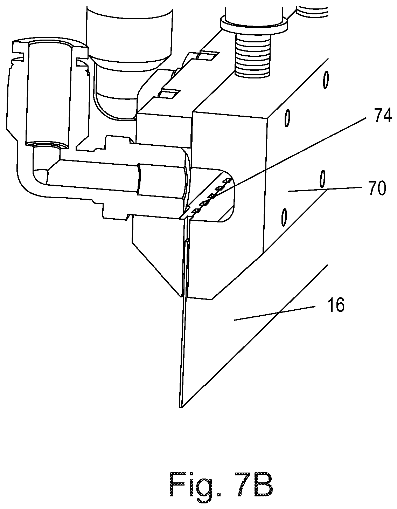

Reference is now made to Figs. 7A and 7B which illustrates apparatus for drying the blade at blade cleaning station 20. After moving the blade 16 from the water reservoir 32, air flow over the blade 16 dries the excess water from the blade surface. The blade surface may be dried to eliminate damage during build of the next layer. Water and other solvents if remaining on the blade are liable to damage the green body that is formed from the paste. After all, the solvent is chosen for its ability to act on the paste.

A drying process according to the present embodiments may involve causing dry air to flow through a blade holder to provide an air stream on both sides of the blade.

As shown in Fig. 7A, blade 16 is held in holder 70. The holder 70 has air passages 74 which form an air curtain along the surface of the blade, indicated by solid shading 76.

Fig. 7B illustrates the blade holder 70 in cross section, showing the air passages 74 and blade 16.

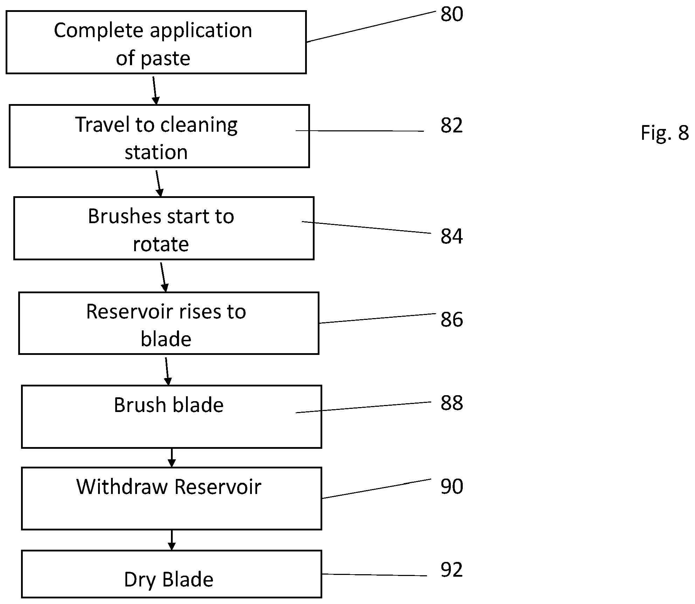

Reference is now made to Fig. 8, which illustrates a blade cleaning process according to an embodiment of the present invention. When the blade has finished wiping the excess paste from the mold surface in the current printing layer 80, it travels 82 to the cleaning position and stops. The brushes start to rotate, 84, and the reservoir goes up 86 to the blade 16. Brushing continues for a preset duration 88, the reservoir is withdrawn downwards 90 and the curtain of air is turned on to dry the blade, 92, typically for a few seconds.

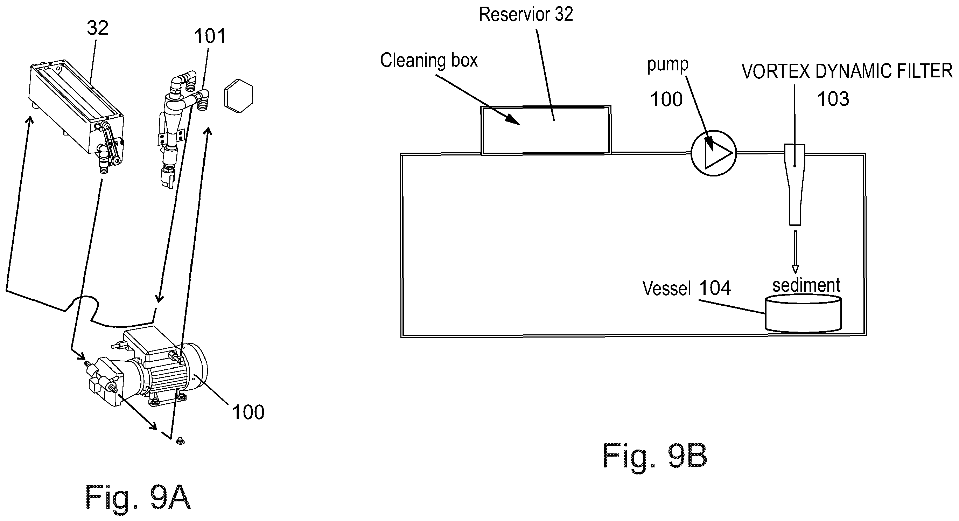

Reference is now made to Figs. 9A and 9B, which illustrate two similar views of water filtration system 30.

In water filtration system 30, a water pump 100, for example the diaphragm pump Flojet R4300, circulates water, applying pressure and flow. The water in the reservoir 32 collects the paste removed from the blade and flows through connection 101 for cleaning, the unit doing the cleaning may be a bag-based filter 103 or a vortex separator 104.

Thus, according to one embodiment, as shown in 10B, the filtration unit is a bag filter system 102 such as the UFB01 304 102 model produced by Orace^{™}. The bag is removed once it is filled with paste or metal powder.

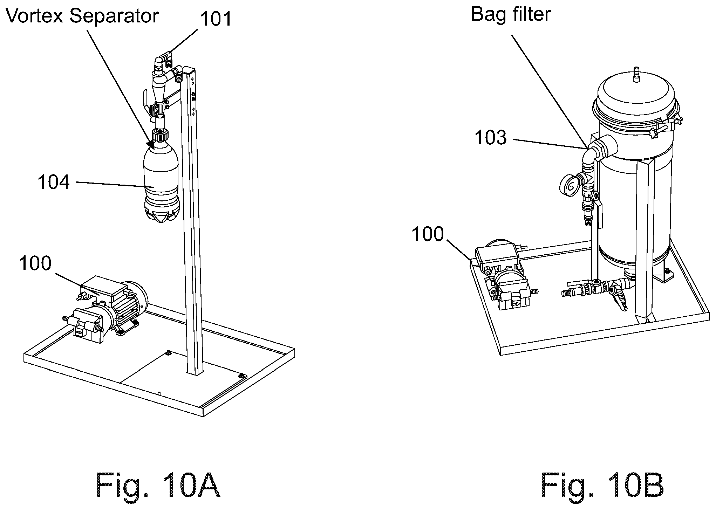

According to another embodiment, the filtration unit is a dynamic vortex separator 103, also known as a Cyclone filter as shown in Fig. 10A, for example the VDF CL-10LW model of Nikuni, Japan. The sediment is separated from the water by centrifugal forces and sinks into a replaceable or disposable collecting vessel 104 connected to the Cyclone port.

Figs. 10A and 10B are diagrams showing the constructions with filter and pump as they might appear in practice. Fig. 10A shows the pump 100 and vortex separator 104, and Fig. 10B shows the pump 100 and bag filter 103.

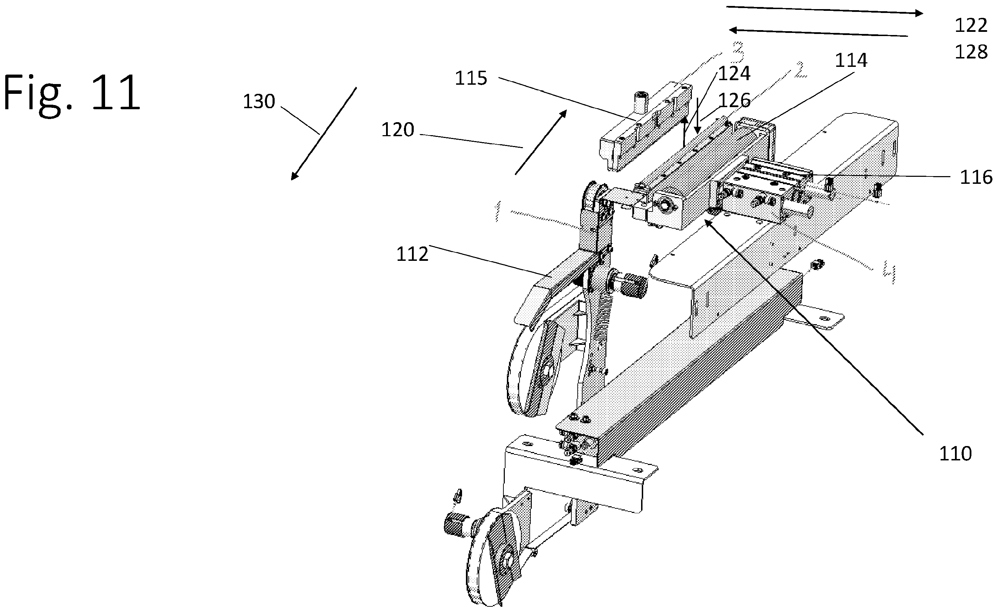

Reference is now made to Fig. 11, which is a simplified diagram illustrating the die slot cleaning mechanism according to an embodiment of the present invention. In Fig. 11, cleaning mechanism 110 comprises a wiping mechanism 112 and a sealing mechanism 114. The wiping mechanism draws a tape along the surface of the die slot 115 to wipe a lower surface of the die slot, and the sealing mechanism applies a seal to the die slot. The sealing mechanism is used prior to relatively long down time of the machine, to ensure that paste does not dry within the die slot, whereas the wiping mechanism is used at intervals during regular operation since a smooth lower surface of the die slot may be needed for accurate leveling of the paste.

More particularly, the wiping system cleans the excess material and the sealing mechanism seals the slot so that residual material (paste) does not dry inside the Die Slot. The two mechanisms, the wiping and the sealing mechanisms, operate in a limited space, and the sealing mechanism 114 is mounted on a pneumatic cylinder 116 that enables it to move aside and clear space for the wiping system.

The cleaning mechanism 110 is operated after the die slot has applied paste to manufacture a layer in the printing process. Once the die slot 115 has applied paste it moves to the cleaning position in proximity to the cleaning mechanism as shown in Fig. 11 and then stops.

The wiping mechanism 112 then wipes the die slot along arrow 120, for example using a roll of cleaning tape. The cleaning tape may be made for example from paper or non-woven materials.

If the cleaning operation is part of a shut down then the sealing mechanism 114 moves inwardly from a parking position towards a position in proximity to the die slot - arrow 122, and then upwardly, arrow 124, to a position underneath the Die Slot 115, which position is a sealing position. A Sealing element is then fixed onto the die slot by the sealing mechanism to seal the slot and thus prevent paste from drying inside the now-sealed slot.

Following sealing, the sealing element 114 is moved down from right under the die slot, arrow 126, to enable the die slot to be returned.

The Die Slot 115 may then be returned towards the printing area and the mold.

The sealing system may then be returned, arrow 128, to make room for the wiping mechanism.

The wiping mechanism may then also be returned to the starting position, along arrow 130. In an embodiment, the wiping mechanism, or an additional mechanism, may be used to clean the sealing element and/or the sealing mechanism, again by a clean section of tape being wiped along the surface.

It is noted that the sealing process may be used prior to a period when the Die slot is not operating for a time long enough for paste to dry. During continuous printing, there is no need for die slot sealing.

The Die Slot 115 is used during the printing process, to apply paste under pressure to fill the mold cavities. Accordingly, the gap between the Die and the mold is not typically more than 100 microns. As a result, the slot surface tends to pick up excess paste from the paste application operation. Thus wiping is used to remove the excess paste picked up while depositing the previous layer, to allow for a smooth and even filling process for the next layer. Smooth and even filling is enhanced if the slot surface itself is smooth and clean.

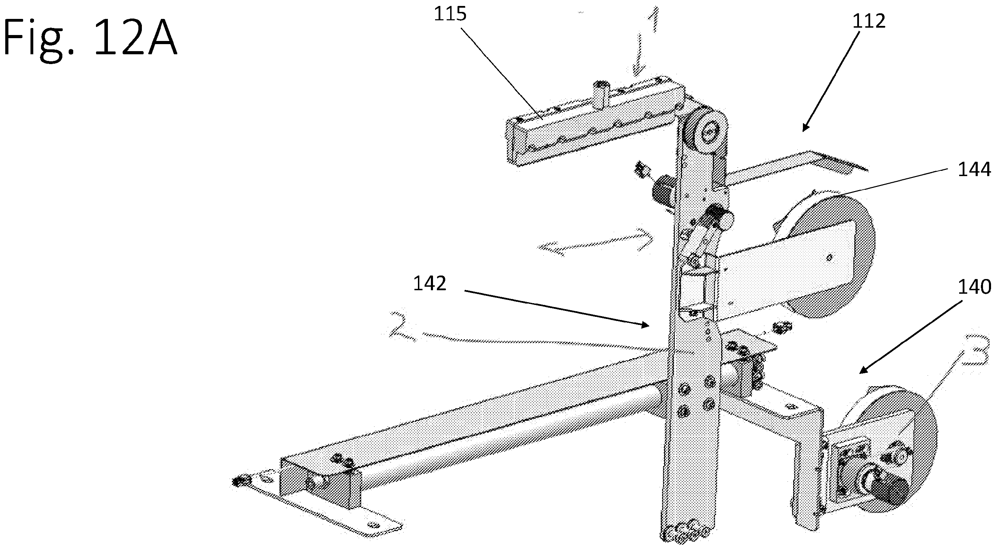

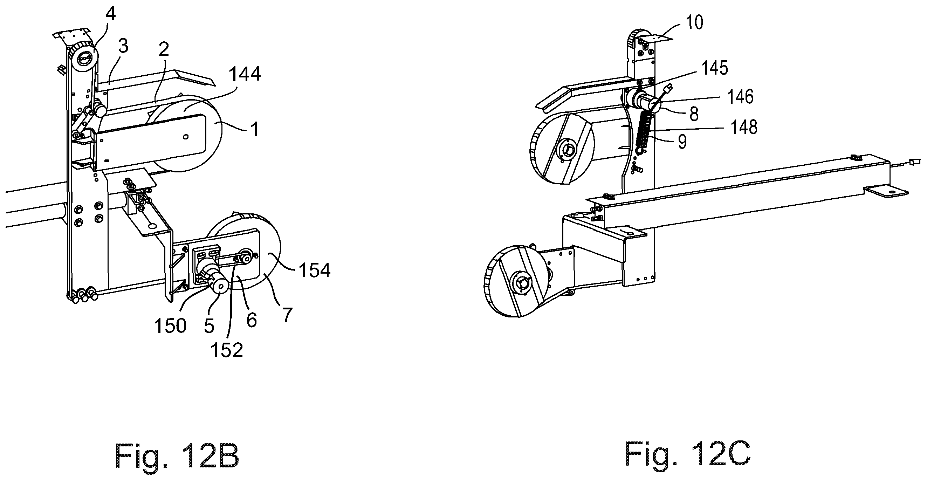

Reference is now made to Figs. 12A, 12B and 12C, which are three different views showing the wiping mechanism 112 in greater detail. The wiping mechanism may comprise a static assembly 140 and a moving assembly 142. The moving assembly 142 moves under the die slot 115 and wipes the die slot 115 with a cleaning tape from reel 144 while in motion.

After wiping, the wiping mechanism 112 advances the cleaning tape to a clean area and the operation repeats itself. In an embodiment, while wiping, the strip of tape moves with the moving assembly 142 rather than being rolled out by the mechanism.
The moving assembly 142 may be driven for example by a rodless magnetic pneumatic cylinder.

The stages of the wiping process may involve firstly unwinding the roll to provide a clean length of strip. An internal friction mechanism may ensure film tension.

The wiping tape may be made of non-woven fabric or lint free fabric, or any other suitable material.

In the moving assembly 142, a nip roller 145 is used to advance the tape by one length from the roller 144. The nip roller is spring loaded. The nip roller is motorized with motor 146, and the spring loading is provided by spring 148.

The roller may be wrapped in sponge rubber or like material to provide friction for the required tension.

The static assembly 140 may include an electric motor 150, a sliding driver belt 152 and a winding roll 154 for the used strip or tape. The static assembly may maintain the tension of the film throughout the entire process. Electric motor 150 may drive the roller winding.

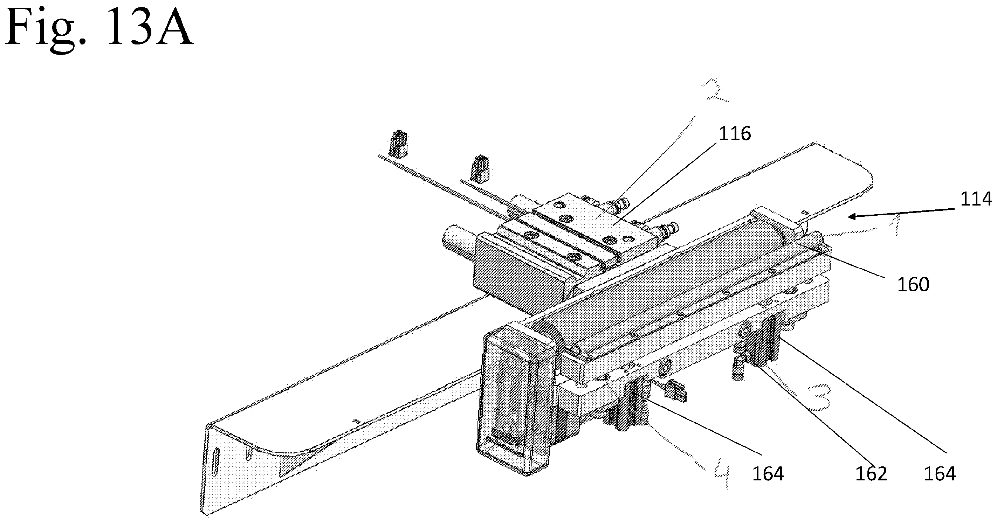

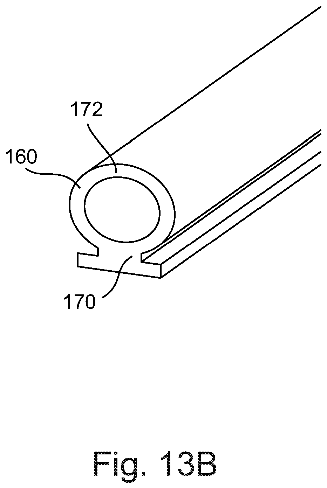

Reference is now made to Figs. 13A and 13B, which are two views of a simplified conceptual illustration of the die slot sealing mechanism 114. Fig. 13A is a perspective view of the sealing mechanism itself, and Fig. 13B shows the sealing element.

As illustrated, the sealing mechanism 114 includes a sealing element 160 for fitting over and sealing the die slot.

The sealing element 160 may be for example a silicone rubber profile seal. Fig. 13B is a detail of an exemplary profile of the sealing element 160 according to embodiments of the present invention. In the exemplary element the profile includes a flat base 170 and a hollow cylinder 172, combined together to form a cross section resembling the number 10.

Returning now to Fig. 13A and the motion sequence for the die slot cleaning assembly is now briefly described. First pneumatic cylinder 116 may drive the mechanism and/or the sealing element from a first, parking, position, to a second, in proximity position, below the Die Slot 115 and not in contact with the die slot. A second Pneumatic cylinder 162 may lift the sealing mechanism and/or the element towards the Die Slot, to allow contact between the sealing element and the die slot to seal the die slot with the sealing element. Linear guides 164 may guide the travel of the sealing mechanism and/or the sealing elements.

It is noted that in one embodiment, the tape cleans the sealing mechanism as well as the die slot.

Returning to Fig. 2, reference is now made to roller cleaning station 26, which cleans the press roller 12 in Figs. 1A-B. The purpose of the press roller in the 3D printing operation is to flatten the upper wall of the printed mold surface. During the flattening operation, excess mold material and paste may adhere to and thus contaminate the roller surface which is required to be an accurate cylindrical surface. Contaminants may harm the accuracy of the roller surface and thus cause the mold wall to be uneven, having consequences for the layer construction and the build of the current part. Hence, cleaning of the roller surface is provided according to the present embodiments.

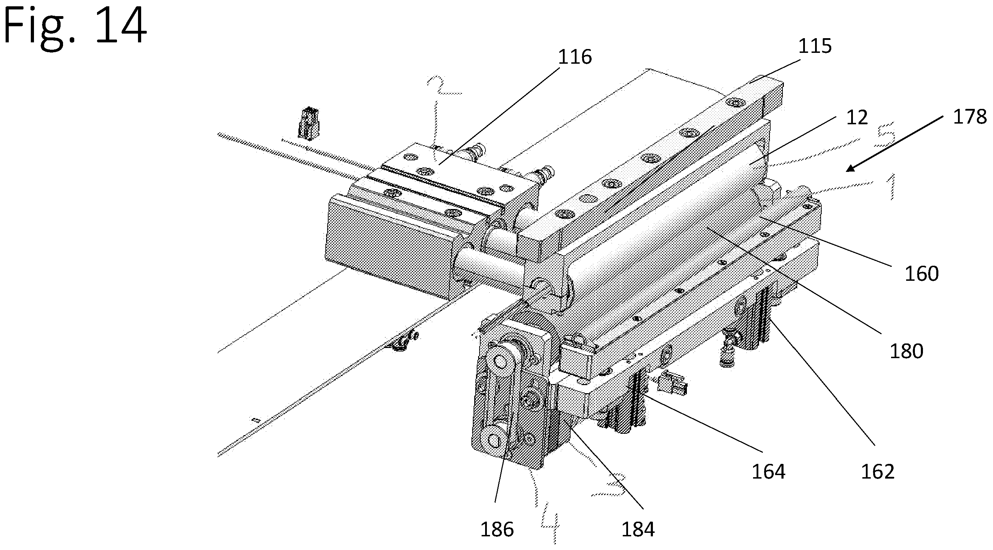

Referring now to Fig. 14, parts that are present in previous figures are given the same reference numerals and are not mentioned again except as needed for an understanding of the roller cleaning mechanism. The roller cleaning system 178 is based on brushing the roller and removing excess mold material or dried paste. The roller 12 is brushed by cylindrical brush 180 which moves under the roller 12 aided by pneumatic cylinder 116 for positioning.

Once in contact with the roller 12, the brush 180 rotates and cleans the roller surface. The rotation of the brush is driven by an electric motor 184 and drive belt 186.

Referring again to Fig. 2, and during the mold filling process, excess paste may contaminate the printing pallet sealing surface on which the layers are printed. However the vacuum cover is required to cover the newly formed layer and apply vacuum and thus harden the layer. However debris on the pallet surface may prevent the vacuum hood from forming a seal with the pallet, and thus prevent the vacuum from being formed. Rather, in order to ensure that a sufficient vacuum is formed, the surface of the pallet may be cleaned. Accordingly, air pressure system 28 may blow compressed air against the vacuum sealing surface. The air thus clears the surface and the hood may then be lowered to seal with the pallet.

The terms "comprises", "comprising", "includes", "including", "having" and their conjugates mean "including but not limited to".

The term "consisting of" means "including and limited to".

As used herein, the singular form "a", "an" and "the" include plural references unless the context clearly dictates otherwise.

## Claims

1. A 3D printing system comprising:
a blade (16) for spreading a paste,;
a cleaning system (20), the cleaning system (20) comprising an applicator for applying a fluid to the blade (16) to clean the blade (16) after spreading the paste;
an injection head (10) comprising a die slot (14, 115) for exuding said paste, the die slot (14, 115) having a lower surface through which the paste is exuded, the cleaning system (20) comprising a wiping mechanism configured to wipe said lower surface of paste, wherein said wiping mechanism comprises an advanceable tape, the wiping mechanism configured to advance said tape to an unused length, and to wipe said length of unused tape along said lower surface of said die slot (14,115).

2. The 3D printing system of claim 1, wherein the cleaning system (20) comprises an immersion bath for said fluid, the immersion bath filled with said fluid to a fluid surface level, the immersion bath being for example retractable.

3. The 3D printing system of claim 2, wherein the applicator comprises rotating brushes partly submerged in said fluid, the blade cleaning system (20) configured to locate said blade (16) between said brushes, and to rotate said brushes onto said knife such that each surface of said blade (16) is brushed into said fluid, the brushes for example being configured to be contra-rotated, each brush brushing a respective surface of said blade (16) downwardly into said fluid .

4. The 3D printing system of claim 1, the cleaning system (20) comprising a blade holder (70) and air ducts directed at said blade (16), the air ducts connected to a source of pressurized air.

5. The 3D printing system of claim 3, wherein said blade (16) is held in a blade holder (70), said blade holder (70) comprising air ducts directed at said blade (16), the air ducts connected to a source of pressurized air to provide a curtain of pressurized air running along said blade (16), and/or wherein said cleaning system (20) is configured to apply said curtain of pressurized air following withdrawal of said blade (16) from between said brushes.

6. The 3D printing system of claim 3 or claim 5, wherein the brushes respectively comprise sections of silicone sheets, and/or wherein the brushes respectively comprise sections cut to have an inner diameter with protrusions reaching an outer diameter, the sections further having a central mounting slot.

7. The 3D printing system of any one of claims 3, 5 and 6, wherein the brushes respectively comprise sections cut to have an inner diameter with protrusions reaching an outer diameter, the sections further having a central mounting slot and said sections comprise an odd number of said protrusions, the sections being misaligned with respective neighbouring sections.

8. The 3D printing system of claim 1, the cleaning system (20) further comprising a die slot (14,115) sealing mechanism, the die slot (14,115) sealing mechanism configured to engage a sealing element into said die slot to seal said die slot (14,115) and prevent drying of paste within said die slot (14,115) during periods of non-use.

9. The 3D printing system of claim 8, wherein said sealing element comprises a resilient material and has a lateral cross section comprising a flat base and a hollow "O" section, or wherein said sealing mechanism is movable between a first, parking position, a second position in proximity to said die slot (14,115) when said die slot (14,115) is in a cleaning position and a third position in contact with said die slot (14,115), said sealing mechanism configured to insert said sealing element over said die slot (14,115) from said third position, the wiping mechanism configured to advance said tape to an unused length, and to wipe along a surface of said sealing mechanism.

10. The 3D printing system of any one of the preceding claims, further comprising a roller, the cleaning mechanism comprising a cylindrical brush, the cylindrical brush being controlled to make contact with said roller and to rotate over a surface of said roller, and/or further comprising a vacuum cover for placing over a newly formed layer to seal with a printing platen and form a vacuum over said layer to harden said layer, and a source of pressurized air, the source of pressurized air being controllable to provide compressed air to said platen prior to providing said vacuum, thereby to remove debris from said platen to allow a vacuum seal to be formed.

11. A method of cleaning the blade (16) of the injection head of the 3D printing system of claim 1, the method comprising:
moving said injection head from a printing station to a cleaning station; and
at said cleaning station applying fluid to said blade (16) to clean said blade (16).

12. The method of claim 11, wherein said applying said fluid comprises:
locating said blade (16) between brushes;
rotating said brushes;
raising up a reservoir of fluid such that said brushes are partly submerged in said fluid;
withdrawing said reservoir; and
drying said blade (16), wherein said drying said blade (16) comprises connecting a high pressure source of air to a blade holder (70) and directing air from said high pressure source to form curtains of air over either side of said blade (16).

## Patentansprüche

1. 3D-Drucksystem, umfassend:
eine Rakel (16) zum Verteilen einer Paste;
ein Reinigungssystem (20), wobei das Reinigungssystem (20) einen Applikator zum Aufbringen eines Fluids auf die Rakel (16) umfasst, um die Rakel (16) nach dem Verteilen der Paste zu reinigen;
einen Injektionskopf (10), umfassend einen Düsenschlitz (14, 115) zum Austretenlassen der Paste, wobei der Düsenschlitz (14, 115) eine Unterseite aufweist, durch welche die Paste austritt, wobei das Reinigungssystem (20) einen Wischmechanismus umfasst, der dazu eingerichtet ist, die Paste von der Unterseite abzuwischen, wobei der Wischmechanismus ein vorschiebbares Band umfasst, wobei der Wischmechanismus dazu eingerichtet ist, das Band bis zu einem unbenutzten Längenabschnitt vorzuschieben und den Längenabschnitt unbenutzten Bandes entlang der Unterseite des Düsenschlitzes (14, 115) zu wischen.

2. 3D-Drucksystem nach Anspruch 1, wobei das Reinigungssystem (20) ein Tauchbad für das Fluid umfasst, wobei das Tauchbad bis zu einem Fluidoberflächenniveau mit dem Fluid gefüllt ist und das Tauchbad beispielsweise zurückziehbar ist.

3. 3D-Drucksystem nach Anspruch 2, wobei der Applikator rotierende Bürsten umfasst, die teilweise in das Fluid eingetaucht sind, wobei das Rakelreinigungssystem (20) dazu eingerichtet ist, die Rakel (16) zwischen den Bürsten anzuordnen und die Bürsten gegen das Messer zu drehen, derart, dass jede Oberfläche der Rakel (16) in das Fluid gebürstet wird, wobei die Bürsten beispielsweise dazu eingerichtet sind, gegenläufig gedreht zu werden, wobei jede Bürste eine jeweilige Oberfläche der Rakel (16) nach unten in das Fluid hinein bürstet.

4. 3D-Drucksystem nach Anspruch 1, wobei das Reinigungssystem (20) einen Rakelhalter (70) und auf die Rakel (16) gerichtete Luftkanäle umfasst, wobei die Luftkanäle mit einer Druckluftquelle verbunden sind.

5. 3D-Drucksystem nach Anspruch 3, wobei die Rakel (16) in einem Rakelhalter (70) gehalten ist, wobei der Rakelhalter (70) auf die Rakel (16) gerichtete Luftkanäle umfasst, wobei die Luftkanäle mit einer Druckluftquelle verbunden sind, um einen entlang der Rakel (16) verlaufenden Druckluftvorhang bereitzustellen, und/oder wobei das Reinigungssystem (20) dazu eingerichtet ist, den Druckluftvorhang nach dem Herausziehen der Rakel (16) aus dem Bereich zwischen den Bürsten aufzubringen.

6. 3D-Drucksystem nach Anspruch 3 oder Anspruch 5, wobei die Bürsten jeweils Abschnitte aus Silikonfolien umfassen und/oder wobei die Bürsten jeweils Abschnitte umfassen, die so zugeschnitten sind, dass sie einen Innendurchmesser mit Vorsprüngen aufweisen, die bis zu einem Außendurchmesser reichen, wobei die Abschnitte ferner einen zentralen Montageschlitz aufweisen.

7. 3D-Drucksystem nach einem der Ansprüche 3, 5 und 6, wobei die Bürsten jeweils Abschnitte umfassen, die so zugeschnitten sind, dass sie einen Innendurchmesser mit Vorsprüngen aufweisen, die bis zu einem Außendurchmesser reichen, wobei die Abschnitte ferner einen zentralen Montageschlitz aufweisen und die Abschnitte eine ungerade Anzahl der Vorsprünge umfassen, wobei die Abschnitte gegenüber den jeweils benachbarten Abschnitten versetzt angeordnet sind.

8. 3D-Drucksystem nach Anspruch 1, wobei das Reinigungssystem (20) ferner einen Abdichtmechanismus für den Düsenschlitz (14, 115) umfasst, wobei der Abdichtmechanismus für den Düsenschlitz (14, 115) dazu eingerichtet ist, ein Dichtungselement in den Düsenschlitz einzubringen, um den Düsenschlitz (14, 115) abzudichten und ein Trocknen der Paste innerhalb des Düsenschlitzes (14, 115) während Zeiträumen der Nichtbenutzung zu verhindern.

9. 3D-Drucksystem nach Anspruch 8, wobei das Dichtungselement ein elastisch nachgiebiges Material umfasst und einen seitlichen Querschnitt aufweist, der eine flache Basis und einen hohlen "O"-förmigen Abschnitt umfasst, oder wobei der Abdichtmechanismus zwischen einer ersten Parkposition, einer zweiten Position in der Nähe des Düsenschlitzes (14, 115), wenn sich der Düsenschlitz (14, 115) in einer Reinigungsposition befindet, und einer dritten Position in Kontakt mit dem Düsenschlitz (14, 115) bewegbar ist, wobei der Abdichtmechanismus dazu eingerichtet ist, das Dichtungselement aus der dritten Position über den Düsenschlitz (14, 115) einzusetzen, wobei der Wischmechanismus dazu eingerichtet ist, das Band bis zu einem unbenutzten Längenabschnitt vorzuschieben und entlang einer Oberfläche des Abdichtmechanismus zu wischen.

10. 3D-Drucksystem nach einem der vorhergehenden Ansprüche, ferner umfassend eine Walze, wobei der Reinigungsmechanismus eine zylindrische Bürste umfasst, wobei die zylindrische Bürste derart gesteuert wird, dass sie mit der Walze in Kontakt kommt und auf einer Oberfläche der Walze rotiert, und/oder ferner umfassend eine Vakuumabdeckung zum Anordnen über einer neu gebildeten Schicht, um mit einer Druckplatte abzudichten und über der Schicht ein Vakuum zu erzeugen, um die Schicht auszuhärten, sowie eine Druckluftquelle, wobei die Druckluftquelle steuerbar ist, um der Druckplatte vor dem Erzeugen des Vakuums Druckluft zuzuführen, um dadurch Verunreinigungen von der Druckplatte zu entfernen und die Bildung einer Vakuumabdichtung zu ermöglichen.

11. Verfahren zum Reinigen der Rakel (16) des Injektionskopfs des 3D-Drucksystems nach Anspruch 1, wobei das Verfahren umfasst:
Bewegen des Injektionskopfs von einer Druckstation zu einer Reinigungsstation; und
Aufbringen eines Fluids auf die Rakel (16) an der Reinigungsstation, um die Rakel (16) zu reinigen.

12. Verfahren nach Anspruch 11, wobei das Aufbringen des Fluids umfasst:
Anordnen der Rakel (16) zwischen Bürsten;
Drehen der Bürsten;
Anheben eines Fluidreservoirs, sodass die Bürsten teilweise in das Fluid eingetaucht sind;
Zurückziehen des Reservoirs; und
Trocknen der Rakel (16), wobei das Trocknen der Rakel (16) das Verbinden einer Hochdruckluftquelle mit einem Rakelhalter (70) und das Leiten von Luft aus der Hochdruckluftquelle umfasst, um Luftvorhänge über den beiden Seiten der Rakel (16) zu bilden.

## Revendications

1. Système d'impression 3D comprenant :
une racle (16) destinée à étaler une pâte ;
un système de nettoyage (20), le système de nettoyage (20) comprenant un applicateur destiné à appliquer un fluide sur la racle (16) afin de nettoyer la racle (16) après l'étalement de la pâte ;
une tête d'injection (10) comprenant une fente de filière (14, 115) destinée à faire exsuder ladite pâte, la fente de filière (14, 115) présentant une surface inférieure à travers laquelle la pâte est exsudée, le système de nettoyage (20) comprenant un mécanisme d'essuyage configuré pour essuyer ladite surface inférieure afin d'en retirer la pâte, dans lequel ledit mécanisme d'essuyage comprend une bande pouvant être avancée, le mécanisme d'essuyage étant configuré pour faire avancer ladite bande jusqu'à une longueur inutilisée et pour essuyer ladite longueur de bande inutilisée le long de ladite surface inférieure de ladite fente de filière (14, 115).

2. Système d'impression 3D selon la revendication 1, dans lequel le système de nettoyage (20) comprend un bain d'immersion destiné audit fluide, le bain d'immersion étant rempli dudit fluide jusqu'à un niveau de surface du fluide, le bain d'immersion étant par exemple rétractable.

3. Système d'impression 3D selon la revendication 2, dans lequel l'applicateur comprend des brosses rotatives partiellement immergées dans ledit fluide, le système de nettoyage de la racle (20) étant configuré pour placer ladite racle (16) entre lesdites brosses et pour faire tourner lesdites brosses contre ledit couteau de telle sorte que chaque surface de ladite racle (16) soit brossée dans ledit fluide, les brosses étant par exemple configurées pour être entraînées en rotation en sens opposés, chaque brosse brossant une surface respective de ladite racle (16) vers le bas dans ledit fluide.

4. Système d'impression 3D selon la revendication 1, le système de nettoyage (20) comprenant un porte-racle (70) et des conduits d'air dirigés vers ladite racle (16), les conduits d'air étant raccordés à une source d'air sous pression.

5. Système d'impression 3D selon la revendication 3, dans lequel ladite racle (16) est maintenue dans un porte-racle (70), ledit porte-racle (70) comprenant des conduits d'air dirigés vers ladite racle (16), les conduits d'air étant raccordés à une source d'air sous pression afin de fournir un rideau d'air sous pression s'étendant le long de ladite racle (16), et/ou dans lequel ledit système de nettoyage (20) est configuré pour appliquer ledit rideau d'air sous pression après le retrait de ladite racle (16) d'entre lesdites brosses.

6. Système d'impression 3D selon la revendication 3 ou la revendication 5, dans lequel les brosses comprennent respectivement des sections de feuilles de silicone, et/ou dans lequel les brosses comprennent respectivement des sections découpées de manière à présenter un diamètre intérieur muni de saillies s'étendant jusqu'à un diamètre extérieur, les sections présentant en outre une fente centrale de montage.

7. Système d'impression 3D selon l'une quelconque des revendications 3, 5 et 6, dans lequel les brosses comprennent respectivement des sections découpées de manière à présenter un diamètre intérieur muni de saillies s'étendant jusqu'à un diamètre extérieur, les sections présentant en outre une fente centrale de montage et lesdites sections comprenant un nombre impair desdites saillies, les sections étant désalignées par rapport aux sections voisines respectives.

8. Système d'impression 3D selon la revendication 1, le système de nettoyage (20) comprenant en outre un mécanisme d'étanchéité de la fente de filière (14, 115), le mécanisme d'étanchéité de la fente de filière (14, 115) étant configuré pour introduire un élément d'étanchéité dans ladite fente de filière afin d'étanchéifier ladite fente de filière (14, 115) et d'empêcher le séchage de la pâte à l'intérieur de ladite fente de filière (14, 115) pendant des périodes de non-utilisation.

9. Système d'impression 3D selon la revendication 8, dans lequel ledit élément d'étanchéité comprend un matériau résilient et présente une section transversale latérale comprenant une base plane et une section creuse en forme de « O », ou dans lequel ledit mécanisme d'étanchéité est mobile entre une première position de stationnement, une deuxième position à proximité de ladite fente de filière (14, 115) lorsque ladite fente de filière (14, 115) se trouve dans une position de nettoyage, et une troisième position en contact avec ladite fente de filière (14, 115), ledit mécanisme d'étanchéité étant configuré pour insérer ledit élément d'étanchéité au-dessus de ladite fente de filière (14, 115) à partir de ladite troisième position, le mécanisme d'essuyage étant configuré pour faire avancer ladite bande jusqu'à une longueur inutilisée et pour essuyer le long d'une surface dudit mécanisme d'étanchéité.

10. Système d'impression 3D selon l'une quelconque des revendications précédentes, comprenant en outre un rouleau, le mécanisme de nettoyage comprenant une brosse cylindrique, la brosse cylindrique étant commandée de manière à entrer en contact avec ledit rouleau et à tourner sur une surface dudit rouleau, et/ou comprenant en outre un couvercle de mise sous vide destiné à être placé au-dessus d'une couche nouvellement formée afin d'assurer une étanchéité avec un plateau d'impression et de former un vide au-dessus de ladite couche afin de durcir ladite couche, ainsi qu'une source d'air sous pression, la source d'air sous pression pouvant être commandée de manière à fournir de l'air comprimé audit plateau avant la production dudit vide, de manière à retirer ainsi les débris dudit plateau pour permettre la formation d'un joint d'étanchéité au vide.

11. Procédé de nettoyage de la racle (16) de la tête d'injection du système d'impression 3D selon la revendication 1, le procédé comprenant :
le déplacement de ladite tête d'injection d'une station d'impression à une station de nettoyage ; et
au niveau de ladite station de nettoyage, l'application d'un fluide sur ladite racle (16) afin de nettoyer ladite racle (16).

12. Procédé selon la revendication 11, dans lequel ladite application dudit fluide comprend :
le placement de ladite racle (16) entre des brosses ;
la rotation desdites brosses ;
le relèvement d'un réservoir de fluide de telle sorte que lesdites brosses soient partiellement immergées dans ledit fluide ;
le retrait dudit réservoir ; et
le séchage de ladite racle (16), dans lequel ledit séchage de ladite racle (16) comprend le raccordement d'une source d'air à haute pression à un porte-racle (70) et l'orientation de l'air provenant de ladite source à haute pression de manière à former des rideaux d'air sur chacun des deux côtés de ladite racle (16).
